Europäisches Patentamt

European Patent Office

Office européen des brevets

(11) Numéro de publication: **0 060 400**
A1

# DEMANDE DE BREVET EUROPEEN

(21) Numéro de dépôt: **82101182.2**

(22) Date de dépôt: **17.02.82**

(51) Int. Cl.³: **F 02 B 43/08**

(30) Priorité: **12.03.81 FR 8105002**

(43) Date de publication de la demande: **22.09.82**
**Bulletin 82/38**

(84) Etats contractants désignés: **DE IT NL**

(71) Demandeur: **SOCIETE NOUVELLE DES TRANSPORT RAPIDES CALBERSON:Société anonyme dite,**
**183, avenue de Clichy, F-75850 Paris Cédex 17 (FR)**

(72) Inventeur: **Godbille, Jean, 8, rue du Manège,**
**F-80000 Amiens (FR)**

(74) Mandataire: **Casalonga, Axel et al, BUREAU D.A.**
**CASALONGA OFFICE JOSSE & PETIT**
**Baaderstrasse 12-14, D-8000 München 5 (DE)**

(54) **Dispositif pour l'alimentation mixte au gaz pauvre et au gazole d'un moteur diesel.**

(57) Dispositif pour l'alimentation mixte au gaz pauvre et au gazole d'un moteur Diesel.

Dispositif d'alimentation mixte au gaz pauvre et gazole pour un moteur Diesel, équipant plus particulièrement un véhicule routier et caractérisé par le fait que le gaz, produit par un générateur (4 à 30), arrive au moteur (32) directement et sans retenue, sauf au régime de ralenti, la puissance étant réglée essentiellement par l'injection d'une quantité minimum de gazole qui ne sert qu'à atteindre la température d'inflammation du gaz pauvre et à régler le régime du moteur.

# 1

Dispositif pour l'alimentation mixte au gaz pauvre et au
gazole d'un moteur Diesel.

---

L'invention concerne l'alimentation des moteurs Diesel,
en particulier des moteurs de camion, et vise essentiellement
à réduire dans des proportions très importantes la consommation de gazole.

On sait depuis longtemps alimenter à l'aide de gaz pauvre
issu d'un gazogène un moteur de véhicule. Cependant le moteur
ainsi alimenté est toujours un moteur à explosion muni d'un
dispositif mélangeur de gaz pauvre et d'air remplaçant le
carburateur. Par contre pour des moteur à injection directe,
comme des moteurs Diesel, il n'a jamais été possible de les
alimenter entièrement au gaz pauvre, dans l'impossibilité où
l'on se trouve de provoquer l'inflammation de ce gaz directement dans les cylindres pour fonctionner selon un cycle
Diesel.

Si on alimente l'admission d'un moteur Diesel par un
mélange de gaz pauvre et d'air, il est donc nécessaire de
commander l'allumage, par exemple à l'aide d'une bougie électrique, puisque la température d'inflammation du gaz pauvre
est très élevée et toujours supérieure à la température atteinte à la fin de la compression. Le moteur Diesel est alors
en fait transformé en moteur à explosion, ce qui nécessite des
transformations profondes et crée de nombreuses difficultés.
En outre, si on utilise un moteur suralimenté à l'aide d'un
turbocompresseur, il est normalement nécessaire de prévoir
deux turbocompresseurs, soit un pour le gaz pauvre et un pour
l'air, en raison des risques d'auto-inflammation et d'explosion qui se produiraient si l'on comprimait directement le
mélange de gaz pauvre et d'air dans un turbocompresseur unique
entraîné par les gaz d'échappement. Enfin on connaît les
innombrables difficultés liées au fonctionnement propre du
gazogène lui-même, notamment au niveau des condensations, des
productions de goudron et de poussière, ce qui conduit le plus
souvent à l'utilisation de charbon de bois comme combustible
pour le gazogène, ce combustible n'étant pas extrêmement
économique.

2

C060400

Le but de l'invention est de réaliser un dispositif d'alimentation qui permette de réduire dans des proportions importantes, sinon de supprimer, la consommation en gazole, tout en utilisant un moteur Diesel normal sans modifications importantes, et qui puisse fonctionner directement au bois, et cela d'une manière absolument automatique et commandable directement depuis la cabine de conduite du véhicule.

L'idée de base de l'invention est de mettre à profit le fait exposé plus haut que la température d'inflammation d'un mélange d'un gaz pauvre et d'air est très supérieure à la température atteinte à fin de compression dans un cylindre de moteur Diesel, alors qu'au contraire la température d'inflammation d'un brouillard de gazole est très inférieure à cette température atteinte dans le cylindre, pour réaliser l'allumage du gaz pauvre en injectant une quantité minime de gazole. Le gazole n'est donc pas utilisé en tant qu'apport notable d'énergie mais sert essentiellement à produire l'inflammation du gaz pauvre, ce qui permet à l'injecteur habituel avec sa pompe d'injection normale d'être utilisé comme allumeur, c'est-à-dire pour déterminer l'instant exact où se produit l'inflammation du mélange. Ceci permet de conserver le moteur Diesel inchangé grâce à une alimentation mixte, mais dans laquelle la part d'énergie apportée par le gazole est extrêmement faible, par exemple de moins de 10% du bilan énergétique total, en conservant notamment la possibilité de repasser à l'alimentation complète au gazole puisque le moteur reste inchangé, mise à part l'action sur la pompe à injection.

Une application particulièrement intéressante concerne les moteurs Diesel suralimentés à l'aide d'un turbocompresseur qui permettent à l'origine une économie d'énergie et de poids par rapport à la puissance maximale disponible. Dans ce cas l'invention prévoit de diviser le flux d'air sortant du turbocompresseur en deux parties, dont une partie alimente le gazogène en le mettant sous pression, et dont l'autre partie se trouve réchauffée et alimente directement la chapelle d'admission où se fait le mélange avec le gaz pauvre épuré provenant du gazogène et arrivant à la même pression. L'auto-

0060400

maticité de fonctionnement est obtenue en commandant un volet de réglage du gaz directement par la pédale d'accélérateur pour une restriction au ralenti, en commandant le volet d'air par un vérin pneumatique en fonction de la surpression régnant dans le conduit d'échappement, et enfin en commandant le débit de la pompe à injection par un servomoteur lui-même commandé par deux pressostats en fonction de la pression du gaz pauvre régnant dans l'admission juste avant le mélange afin d'augmenter le débit au-dessous d'une certain valeur de la pression et de réduire ce débit au-dessus d'une certain autre valeur.

Le générateur de gaz pauvre proprement dit comporte d'autre part plusieurs dispositifs destinés à éliminer automatiquement et à divers niveaux les condensations qui se produisent afin de pouvoir fonctionner au bois, et il est naturellement agencé pour pouvoir résister à une pression intérieure correspondant à celle fournie par le turbocompresseur.

D'autres particularités de l'invention apparaîtront dans la description qui va suivre d'un mode de réalisation pris comme exemple et représenté sur le dessin annexé sur lequel :

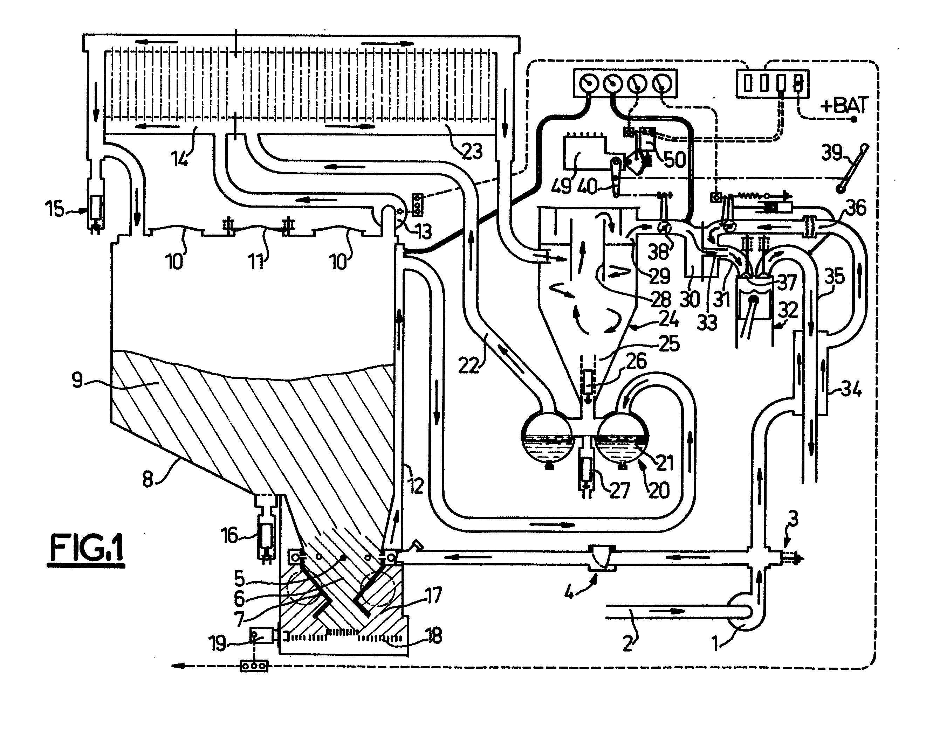

la figure 1 est un schéma d'ensemble de l'installation; et

la figure 2 un détail du dispositif de régulation.

L'exemple choisi correspond au cas particulièrement intéressant d'un moteur Diesel suralimenté par un turbocompresseur 1 entraîné par les gaz d'échappement. Un filtre à air habituel, non représenté, alimente par 2 l'étage de compression du turbocompresseur 1, et cet air une fois comprimé a une pression variable limitée volontairement par exemple à 0,6 bar par une soupape de sécurité 3, chemine selon deux circuits, le premier correspondant à la production de gaz pauvre et le second à la fourniture de l'air additionnel qui sera mélangé au gaz pauvre juste avant l'admission dans les cylindres.

Le premier circuit passe par un clapet de retenue anti-goudron 4, puis alimente des tuyères 5 réparties sur le pourtour du foyer 6 qui est du type inversé en forme de tuyère sensiblement biconique. Les parois de la tuyère 6 peuvent avantageusement être constituées par deux troncs de pyramides octogonales, les tuyères 5 étant alors avantageusement au nombre de 8.

En traversant ce foyer 6 de haut en bas, l'air active la combustion en réduisant les goudrons contenus dans le gaz formé par échauffement du bois d'alimentation du foyer. En effet ce foyer 6 est alimenté par une grande trémie 8 contenant une importante réserve 9 de bois en morceaux, introduit à la partie supérieure par des couvercles de fermeture 10 et un couvercle spécial 11 fixé par des ressorts tarés pour fonctionner en soupape de sécurité d'une manière connue. Ces ressorts sont tarés pour 0,7 bar dans le présent exemple.

Selon une première particularité de l'invention, l'ensemble des parois du générateur de gaz, comprenant la trémie 8 et la cuve 12 contenant le foyer, est agencé pour résister à une pression intérieure, réglée par les deux soupapes de sécurité 3 et 11, et éprouvé par exemple à 1 bar.

Selon une autre particularité il est prévu à la partie supérieure de la trémie 8 une circulation d'air constituée par un ventilateur 13 qui aspire l'air de la trémie au-dessus du bois 9 et le fait passer dans un condenseur 14 avant de le renvoyer dans la partie supérieure de la trémie 8. Le produit de la condensation, essentiellement de l'eau, des goudrons et des acides, est évacué vers l'extérieur par une soupape hydraulique d'évacuation 15 de type connu comportant un simple flotteur actionnant un pointeau de décharge. Une autre soupape hydraulique identique 16 est disposée au bas de la trémie 8 pour évacuer les produits de condensation se déposant directement sur les parois de la trémie. Au-dessus du foyer 6, ces condensations sont évitées par le fait que les parois de la trémie se trouvent à l'intérieur de la cuve 12. De la sorte les gaz pauvres chauds produits circulent de bas en haut dans l'intervalle entre les deux parois pour éviter ces condensations et réchauffer le bois qui parvient au foyer 6.

Dans celui-ci, l'air qui descend depuis les tuyères 5 produit d'abord la combustion du bois ainsi réchauffé et séché, puis plus bas dans la tuyère 7 la réduction du gaz carbonique produit sous la forme d'oxyde de carbone, après quoi le gaz remonte en passant à travers un lit de charbon de

bois 17 garnissant extérieurement le foyer 7, ce charbon de bois étant supporté par une grille 18, de préférence secouable à distance à partir d'un moteur de secouage 19 qui peut être actionné depuis la cabine.

Le gaz pauvre produit, après avoir traversé la double paroi de la trémie comme on l'a vu plus haut, passe dans un filtre à chicanes 20 où il abandonne ses poussières dans l'eau de barbotage 21. Il est alors conduit par 22 dans un refroidisseur de gaz 23 pour condenser une partie de son eau, puis dans le filtre cyclone 24 où, sous l'action de la force centrifuge engendrée par sa mise en rotation et son frottement sur la paroi, le gaz se sépare par différence de densité des impuretés lourdes, soit l'eau et les goudrons restants, ces derniers se rassemblant à la base en 25. Une troisième soupape hydraulique 26 analogue aux deux précédentes 15 et 16 purge en permanence cette eau vers le filtre à chicanes, qui se trouve ainsi alimentée en permanence, et l'excédent est à son tour évacué vers l'extérieur au moyen d'une quatrième soupape hydraulique 27 analogue aux précédentes.

Le gaz pauvre ainsi purifié remonte par la cheminée centrale 28 du cyclone, et après être passé dans l'étage supérieur à chicanes 29 il se rend au collecteur d'admission 30 où il est mélangé avec l'air provenant du deuxième circuit examiné plus haut avant de pénétrer dans les chapelles d'admission 31 du moteur Diesel 32.

Selon une particularité de l'invention, le gaz pauvre est distribué séparément dans chacune des chapelles d'admission 31 par un conduit central 33 pénétrant très en avant dans la chapelle 31 correspondante, et l'air additionnel est injecté par l'intervalle périphérique entre ce conduit 33 et la chapelle 31. En outre cet air est au préalable réchauffé en passant par un échangeur 34 récupérant la chaleur des gaz de l'échappement 35, et accessoirement par des résistances électriques 36 pour le démarrage à froid.

La faiblesse du volume de mélange détonant réduit ainsi tout risque d'explosion à l'extérieur des cylindres, et par ailleurs la veine d'air creuse et chaude enveloppe le gaz et évite le dépôt des goudrons sur les parois de la chapelle 31 et la tige de la soupape d'admission 37.

En fonction de ce qui précède, on voit qu'à partir d'un turbocompresseur unique 1 on a ainsi une double alimentation en gaz pauvre et en air sensiblement à la même pression pour être mélangés avant l'introduction dans le cylindre.

Il reste à assurer la fonction déterminante, qu'est la régulation de l'ensemble pour un fonctionnement automatique.

Tout d'abord le gaz pauvre produit par le générateur arrive au moteur directement et sans retenue, excepté en fonctionnement au ralenti où un volet de gaz 38, commandé par l'accélérateur 39 et par l'intermédiaire d'un levier 40, réduit l'arrivée de gaz quand la pédale 39 est en position de repos.

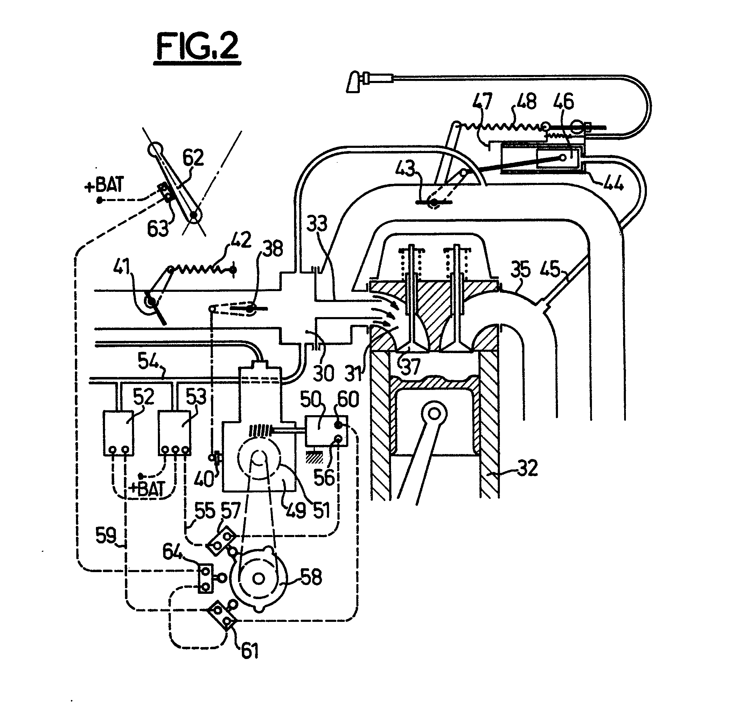

Eventuellement il peut être prévu, comme représenté sur la figure 2, une vanne modératrice 41 à libre fonctionnement rappelée par un ressort taré 42 pour permettre l'arrivée progressive du gaz lors d'une réaccélération.

Sur le circuit d'air réchauffé est prévu un volet d'air 43 commandé par un vérin pneumatique 44 alimenté par une tubulure 45 par la pression régnant dans le collecteur d'échappement 35. La course du piston 46 de ce vérin pneumatique 44 est limitée par une butée 47 de position réglable, éventuellement commandée à distance. L'augmentation de la pression d'échappement agit dans le sens de la fermeture du volet d'air 43, et un ressort antagoniste 48, de tension réglable, agit en sens inverse. L'accroissement de la pression d'échappement produit donc l'augmentation de la richesse du mélange en gaz pauvre, et lorsque cette richesse devient excessive, cela produit une réduction de la pression d'échappement, d'où il s'ensuit un point d'équilibre réglable par la tension du ressort 48, ce qui assure l'automatisme.

En ce qui concerne le réglage de la quantité de gazole, le débit de la pompe d'injection 49 est fonction de la position de tension du ressort de régulateur commandé par un motoréducteur 50. Ce motoréducteur est lui-même commandé en fonction d'une part de la surpression régnant en 30 à l'arrivée du gaz pauvre, et d'autre part de la position de la roue 51 de réglage de la tension du ressort de régulateur de la pompe à injection 49. Pour cela on dispose de deux manocontacts 52 et 53 réunis par une canalisation 54 à la chambre 30, cette canalisation pouvant également conduire à un manomètre de contrôle sur le tableau de bord. Le manocontact 52 a son contact électrique fermé au repos, et s'ouvre au-dessus de 0,2 bar par exemple. Le manocontact 53 a une borne (+ BAT) raccordée à la batterie du véhicule et il réunit celle-ci à une borne alimentant le manocontact 52 pour les pressions basses, et à une connexion 55 pour les pressions supérieures à 0,4 bar par exemple. Cette connexion 55 alimente la borne 56 du servomoteur 50 agissant dans le sens de la réduction du débit de gazole, et ceci par l'intermédiaire d'un contact de fin de course 57 qui se trouve ouvert par un bossage d'une came 58 entraînée par le roue 51 lorsque le débit se trouve réglé à la valeur minimum.

En fonction du schéma représenté, c'est donc la réduction du débit à cette valeur minimum correspondant au ralenti que l'on obtient lorsque la pression dépasse 0,4 bar. Au contraire lorsque la pression est inférieure à 0,2 bar, le courant est transmis par le manocontact 52, qui est alors fermé, et une connexion 59 à la borne 60 commandant le servomoteur 50 dans le sens d'une augmentation du débit, est cela par l'intermédiaire d'un contact 61 actionné également par un autre bossage de la came 58 qui ouvre le contact 61 lorsque le débit a atteint une valeur égale à la valeur minimum précédente augmentée de 20% environ. Cette augmentation facilite la remontée en pression du turbocompresseur 1 en augmentant la pression d'échappement, ce qui produit une suralimentation du moteur ainsi que de l'ensemble de l'installation et une remontée de la pression d'admission. Enfin lorsque la pression en 30 est comprise entre 0,2 et 0,4 bar, aucune des bornes 56 et 60 du servomoteur n'est alimentée et celui-ci reste immobile.

La conduite est donc automatique et agit de la manière suivante : lorsque le conducteur lève le pied de sur l'accélérateur 39, le volet des gaz 38 se referme partiellement et produit le retour aux faibles pressions d'admission, donc
d'échappement, d'où il résulte par le vérin pneumatique 44
l'ouverture du volet d'air 43 et, par l'effet du manocontact
52, l'augmentation partielle de l'injection pour la marche au
ralenti. Au contraire lorsque le conducteur enfonce l'accélérateur 39, cela produit une remontée de la pression d'admission, donc de la pression d'échappement et du régime du turbocompresseur, et à partir de 0,4 bar dans l'admission, avec le
volet des gaz 38 grand ouvert, il se produit par l'effet du
manocontact 53 une diminution de l'injection.

Il en résulte que le réglage du mélange est légèrement
pauvre pour certaines positions intermédiaires, mais optimum
pour la pleine charge. Cette régulation relativement simple
donne automatiquement la position de moindre consommation de
gazole avec le minimum de réglages et ne produit pas de fumée.
On arrive ainsi pour un service normal à consommer uniquement
de 5 à 10% de la consommation de gazole habituelle.

Il est toutefois prévu de pouvoir passer instantanément
sur un fonctionnement exclusif au gazole, soit pour le démarrage à froid, soit pour disposer de la pleine puissance d'origine ou en cas de manque de bois. Pour cela il est prévu une
manette 62 actionnable par le conducteur et comportant deux
positions, dont une, à droite sur la figure 2, correspond à la
marche normale qui vient d'être décrite et l'autre, à gauche,
produit d'une part le blocage du volet d'arrivée d'air 43 en
position ouverte, grâce à une commande mécanique ou pneumatique non représentée, d'autre part le blocage du volet de gaz
38 en position fermée, par une tringlerie non représentée, et
enfin la commande du servomoteur 50 de manière à placer la
pompe d'injection 49 en position de débit complet pour le
fonctionnement uniquement au gazole.

Cette dernière action est obtenue au moyen d'un contact
63, actionné par la manette 62 dans sa deuxième position, pour
réunir la borne d'alimentation de la batterie (+ BAT) à la
borne 60 du servomoteur 50 agissant dans le sens de l'augmentation du débit, et cela par l'intermédiaire d'un contact 64
de fin de course maxi qui est actionné également par la came 58 dans le sens de l'ouverture lorsque la roue 51 de réglage du débit de la pompe 49 atteint son autre position extrême correspondant au débit maximum.

L'invention permet ainsi des économies extrêmement importantes de consommation de gazole, pouvant aller jusqu'à 90% et cela en consommant directement du bois de taillis, combustible relativement économique. L'installation est d'un entretien extrêmement simple et ne nécessite pas de réglages délicats et permanents, toutes les fonctions étant pratiquement contrôlées et commandées depuis la cabine de conduite du véhicule. Les seules modifications à apporter sur le moteur proprement dit sont la modification du collecteur d'admission et de la commande de la pompe à injection, tous les autres organes importants du générateur de gaz pouvant être assemblés en une unité homogène que l'on peut placer aisément, par exemple derrière la cabine d'un tracteur routier.

## REVENDICATIONS

1. Dispositif d'alimentation mixte au gaz pauvre et gazole pour un moteur Diesel, en particulier pour un véhicule, caractérisé par le fait que le gaz pauvre, produit par un générateur de gaz pauvre (4 à 30), arrive au moteur (32) directement sans restriction, sauf au régime de ralenti, la puissance étant réglée essentiellement par l'injection d'une quantité minimum de gazole qui ne sert qu'à atteindre la température d'inflammation du gaz pauvre et à régler le régime du moteur.

2. Dispositif d'alimentation mixte selon la revendication 1, plus particulièrement destiné à un véhicule muni d'un moteur Diesel suralimenté par turbocompresseur, caractérisé par le fait que l'ensemble du générateur de gaz pauvre (4 à 30) fonctionne avec une partie de l'air sous la pression fournie par le turbocompresseur (1), le gaz pauvre produit étant mélangé à l'autre partie de l'air provenant de ce turbocompresseur juste avant la pénétration du mélange dans chaque cylindre du moteur.

3. Dispositif selon la revendication 2, caractérisé par le fait que le gaz pauvre est distribué dans chacune des chapelles d'admission (31) du moteur par une tubulure centrale (33) pénétrant dans cette chapelle (31), tandis que l'air additionnel arrive par le jeu annulaire compris entre cette tubulure (33) et la chapelle (31), et que cet air est préalablement réchauffé avant cette introduction.

4. Dispositif selon l'une quelconque des revendications précédentes, caractérisé par le fait que le gaz pauvre est réglé au régime de ralenti par un volet de gaz (38) commandé par l'accélérateur (39), que l'air est commandé par un volet d'air (43) actionné par un vérin pneumatique (44) en fonction de la pression d'échappement, et que le débit de gazole de la pompe à injection (49) est réglé par un servomoteur (50) en fonction de la pression de gaz pauvre régnant à l'admission (30), de telle manière qu'une pression au-dessus d'une certaine marge produise une réduction du débit, tandis qu'une pression au-dessous de cette marge produit une légère augmentation.

0060400

5. Dispositif selon la revendication 4, caractérisé par le fait qu'une manette de commande permet d'altérer la régulation en vue d'une fonctionnement exclusivement au gazole, en bloquant le volet d'air (43) en position ouverte, le volet de gaz (38) en position fermée, et la pompe (49) en position de débit nominal.

6. Dispositif selon l'une quelconque des revendications précédentes, caractérisé par le fait qu'il comporte une circulation en circuit fermé des gaz contenus dans la trémie d'alimentation (8) du générateur de gaz, circuit comprenant un ventilateur (13) et un condenseur (14) avec des soupapes hydrauliques d'évacuation des effluents liquides, aussi bien dans le condenseur (14) qu'à la base de la trémie (8).

7. Dispositif selon l'une quelconque des revendications précédentes, caractérisé par le fait que son foyer (6) est du type inversé avec une tuyère (7) sensiblement biconique entourée par un garnissage en charbon de bois que traversent les gaz avant de circuler dans une double paroi entourant au moins partiellement la trémie (8) avant de passer à l'épurateur, ce dernier comportant un filtre à chicane (20), un refroidisseur (23), et un cyclone (24), avec également des soupapes hydrauliques (26 et 27) d'évacuation des effluents liquides en excédent.

FIG.1

00060400

**FIG.2**

## DOCUMENTS CONSIDERES COMME PERTINENTS

| Catégorie | Citation du document avec indication, en cas de besoin, des parties pertinentes | Revendication concernée |
|---|---|---|
| A | S.T.Z. SCHWEIZERISCHE TECHNISCHE ZEITSCHRIFT, vol. 70, no. 40, 4 octobre 1973, pages 805-812 Wabern (CH) BUECHLER UND Co.: "Uber die Antriebsmaschinen der LNG-Transportschiffe". <br> * Page 807, colonne de droite à page 810, colonne de droite * | 1,4 |
| A | FR - A - 646 583 (BERNARD) <br> * Page 2, ligne 104 à page 3, ligne 24 * | 2 |
| A | DE - C - 1 196 014 (SCANIA) <br> * Colonne 3, lignes 10-20 * | 7 |
| A | CH - A - 219 829 (TOURING MOTOR) <br> * Page 1, lignes 37-45; figure 1 * | 7 |
| A | CH - A - 220 896 (MIAG) <br> * Page 2, ligne 77 à page 3, ligne 62 * | 7 |

**CLASSEMENT DE LA DEMANDE (Int. Cl. 3)**

F 02 B 43/08

**DOMAINES TECHNIQUES RECHERCHES (Int. Cl. 3)**

F 02 B
F 02 D
B 60 K

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 03-06-1982 | TATUS |